# EUROPEAN PATENT APPLICATION

(11) **EP 0 644 440 A2**
(43) Date of publication of application: **22.03.1995**
(21) Application number: 94306656.3
(22) Date of filing: 12.09.1994
(51) Int. Cl.: G02B 6/44, H04Q 1/14, G02B 6/00

(54) **Cable management system**

(30) Priority: 17.09.1993 GB 9319265
(71) Applicant: BICC Public Limited Company, London W1X 5FH (GB)
(72) Inventor: Cook, Stephen, Liverpool L16 6AX (GB)
(74) Representative: Dlugosz, Anthony Charles

(57) **Abstract**

A cable management system for use in a cabinet housing electronics and/or optical equipment located in a vertical array of horizontal racks comprises a vertical side wall (1) that can be located to one side of the racks, and has a plurality of cable holders (3) thereon. Each cable holder (3) extends from the front of the side wall (1) to a rear wall (2) of the system to allow a cable bundle to extend from the front of a rack to the rear wall, and each cable holder has a height that will accommodate sufficient slack cable bundle when its associated rack is in its normal operating position to enable the rack to be pulled out from the front of the cabinet by taking up the slack in the cable bundle. Preferably the cable holders (3) are in the form of enclosed pockets arranged in an array extending up the side wall, each pocket having openings (7,8) at its front and rear to allow the cable to extend through it and a side face that is removable to allow access to the cable. also clips may be provided along the rear wall to retain the cables against it.

The system enables the cables to be readily accessible if work is need to be conducted on them with a reduced possibility of disrupting traffic on the other live cables.

## Description

This invention relates to cabinets for electronics (including optical) equipment and especially, although not necessarily, to cabinets for telephony racks.

Such equipment is often based in cabinets having a plurality of equipment racks, usually arranged in a vertical array of horizontal racks, which can be located in a normal operating position within the cabinet and which can be pulled out from the front of the cabinet to a limited extent, to allow access to the equipment thereon. One example of such a cabinet may be found in a telephone exchange where arrays of optical fibre splices are provided on the racks of the cabinet. Optical cable bundles are typically routed into the rear of the cabinet and extend down the side of the cabinet to the appropriate rack, and as a consequence, the space in the cabinet to the side of the array of racks normally contains a tightly packed mass of cable. This can cause difficulties in the installation of cable or subsequent modification of the cable, especially if it is required to conduct this without disrupting traffic on any of the other cables.

The present invention provides a cable management system for use in such cabinets, which comprises a vertical side wall that can be located to one side of the racks and has a plurality of cable holders thereon, each cable holder extending from the front of the side wall to a rear wall of the system to allow a cable bundle to extend from the front of a rack to the rear wall via a cable holder associated with the rack, each cable holder having a height that will accommodate sufficient slack cable bundle when its associated rack is in its normal operating position to enable the rack to be pulled out from the front of the cabinet by taking up the slack cable bundle.

Preferably, the cable holders are in the form of enclosed pockets arranged in an array extending up the side wall of the system, each pocket having an opening at its front and its rear to allow the cable bundle to extend therethrough. In this case the pockets may have a face, directed into the space between the side wall and the racks, that is removable in order to allow access to the cable. In addition, the rear wall of the system may be provided with an array of cable clips in order to retain the cable bundles against the wall. The clips are preferably arranged so that the cable bundle from one cable holder extends up the rear wall at a small angle to the vertical in order to leave space for a cable bundle extending from the next higher cable housing to be retained against the rear wall.

The invention has the advantage that the cables are relatively readily accessible if it is necessary to conduct any work on them, and the possibility of disrupting traffic on other live cables is reduced.

In the case of systems for use with optical cables, it may be advantageous for the cable holders to have a bend limiting surface at the front and/or at the back in order to limit the bending of the cable bundles to a minimum radius, e.g. 30mm.

One form of optical management system will now be described by way of example with reference to the accompanying drawings in which:

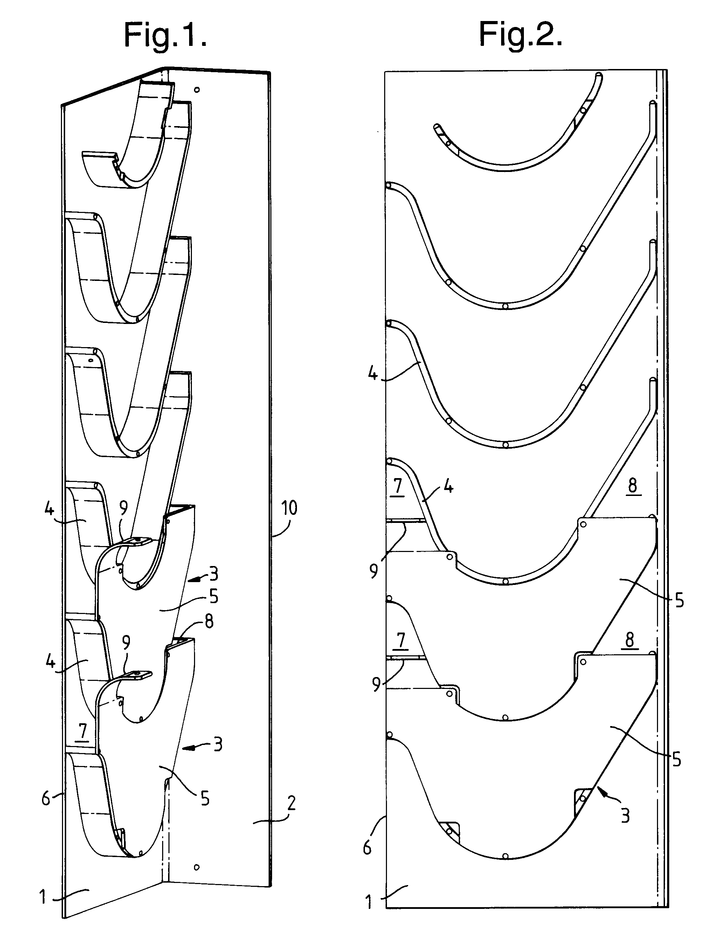

- Figure 1: is a perspective view of the system according to the invention; and
- Figure 2: is a side view of the system shown in figure 1.

Referring to the accompanying drawings, an optical cable management system comprises a side wall 1 and a rear wall 2 of such dimensions that it can be located within a telephony rack cabinet to one side of the racks. If necessary a second system may be provided on the other side of the racks.

An array of cable holders 3 in the form of interlocking pockets extends up the side wall 1 of the system, each cable holder being formed from a curved strip 4 of plastics or metal that is fixed to the side wall 1 and defines a wall separating two cable holders, and a generally flat face 5 that is detachably mounted on adjacent strips 4. Only two such faces 5 are shown. Each cable holder extends from the front edge 6 of the side wall to the rear wall 2 and has two openings 7 and 8, one opening 7 in the region of the front edge 6 of the side wall and the other opening 8 in the region of the rear wall 2. A portion 9 of the face 5 of each cable holder is curved outwardly and may be provided with a cable clip to secure the cable bundle thereto when the rack is in its normal operating position. The curved portion 9 is formed so as to have a bend radius of a defined minimum value in order to prevent any unwanted light loss from the optical fibre bundle.

In use, the system is located in the space within the cabinet between the side wall of the cabinet and the array of racks with the edge 6 thereof generally in line with the front of the cabinet and the faces 5 of the cable holders facing the racks. A cable bundle extending from the front corner of a rack is passed over the curved portion 9 of the cable holder and into the cable holder via opening 7. The cable bundle is held within the cable holder 3 in the form of a catenary and extends out of the cable holder via opening 8 and up the rear wall 2, the bundle being retained on the rear wall 2 by means of cable clips (not shown). The cable bundles do not extend up the wall 2 vertically but at a small angle to the vertical in order to leave room for the bundle from the next higher cable holder 3 to be retained on the wall 2. If necessary, a further side wall (not shown) may be provided opposite the side wall 1 and attached to edge 10 of the rear wall 2 on which cable bundles may also be fixed. Thus, as a cable bundle leaves a cable holder it may extend along the rear wall 2 and the other side wall in a generally helical manner.

The cable holders 3 are of sufficient size, e.g. having a size corresponding generally to the rack spacing so that sufficient slack cable can be located in the cable holder to allow the rack to be pulled out from the front of the cabinet, at least to a limited extent, by taking up the slack.

If it is desired to modify the cabling arrangement, any cable bundle can easily be removed or otherwise worked on with minimal disturbance to the other cables.

## Claims

1. A cable management system for use in a cabinet housing electronics and/or optical equipment located in a vertical array of horizontal racks, which comprises a vertical side wall (1) that can be located to one side of the racks and has a plurality of cable holders (3) thereon, each cable holder (3) extending from the front of the side wall (1) to a rear wall (2) of the system to allow a cable bundle to extend from the front of a rack to the rear wall (2) via a cable holder (3) associated with the rack, and each cable holder having a height that will accommodate sufficient slack cable bundle when its associated rack is in its normal operating position to enable the rack to be pulled out from the front of the cabinet by taking up the slack in a cable bundle.

2. A system as claimed in claim 1, wherein the cable holders (3) are in the form of enclosed pockets arranged in an array extending up the side wall, each pocket having an opening (7) at its front and an opening (8) at its rear to allow the cable bundle to extend therethrough.

3. A system as claimed in claim 2, wherein each pocket has a face (5) directed into the space between the side wall and the racks, that is removable in order to allow access to the cable.

4. A system as claimed in any one of claims 1 to 3, wherein the rear wall (2) is provided with an array of cable clips in order to retain cable bundles against the wall.

5. A system as claimed in claim 4, wherein the clips are arranged so that the cable bundle from one cable holder (3) extends up the rear wall (2) at a small angle to the vertical in order to leave space for a cable bundle extending from the next higher cable housing to be retained against the rear wall.

6. A system as claimed in any one of claims 1 to 5, for use with optical cables, wherein the cable holders (3) each have a bend limiting surface at the front and/or at the back in order to limit the bending of the cable bundles to a minimum radius.
